# EUROPEAN PATENT SPECIFICATION

(11) **EP 1 171 325 B1**
(45) Date of publication and mention of the grant of the patent: **02.07.2003**
(21) Application number: 00965614.1
(22) Date of filing: 12.04.2000
(51) Int. Cl.: B60R 13/02, B29C 44/12, B29C 44/06

(54) **VEHICLE HEADLINER INCLUDING A POLYURETHANE SUBSTRATE AND MULTI-LAYERED LAMINATE, AND METHOD OF MAKING THE SAME**
FAHRZEUGDACHHIMMEL BESTEHEND AUS EINEM POLYURETHANSUBSTRAT UND MEHRSCHICHTLAMINAT, UND VERFAHREN ZU DESSEN HERSTELLUNG
GARNITURE DE PAVILLON POUR VEHICULE COMPORTANT UN SUBSTRAT EN POLYURETHANE ET UN STRATIFIE MULTICOUCHE, ET SON PROCEDE DE FABRICATION

(30) Priority: 22.04.1999 US 130557 P; 06.05.1999 US 132765 P
(43) Date of publication of application: 16.01.2002
(73) Proprietor: Magna Interior Systems Inc., Aurora, Ontario L4G 7K1 (CA)
(72) Inventor: DONATTI, Joseph, T., Howell, MI 48843 (US); LATHIA, Amit, D., Wixom, MI 48393 (US); HERBERT, Jamie, Marie, Fowlerville, MI 48836 (US)
(74) Representative: Hössle, Markus, Dipl.-Phys.
(86) International application number: CA0000384
(87) International publication number: WO00064706

(56) References cited:
- EP-A- 0 671 259
- EP-A- 0 718 097
- EP-A- 0 767 037
- DE-C- 19 632 055
- US-A- 5 300 360
- US-A- 5 536 556
- US-A- 5 565 259

## Description

### Field of the Invention

This invention relates to headliner components for vehicles, and in particular to headliner components comprising an impregnated polyurethane substrate and at least one multi-layered laminate for uniting the substrate to a decorative material. This invention further relates to a method of making the headliner components.

### Background of Invention

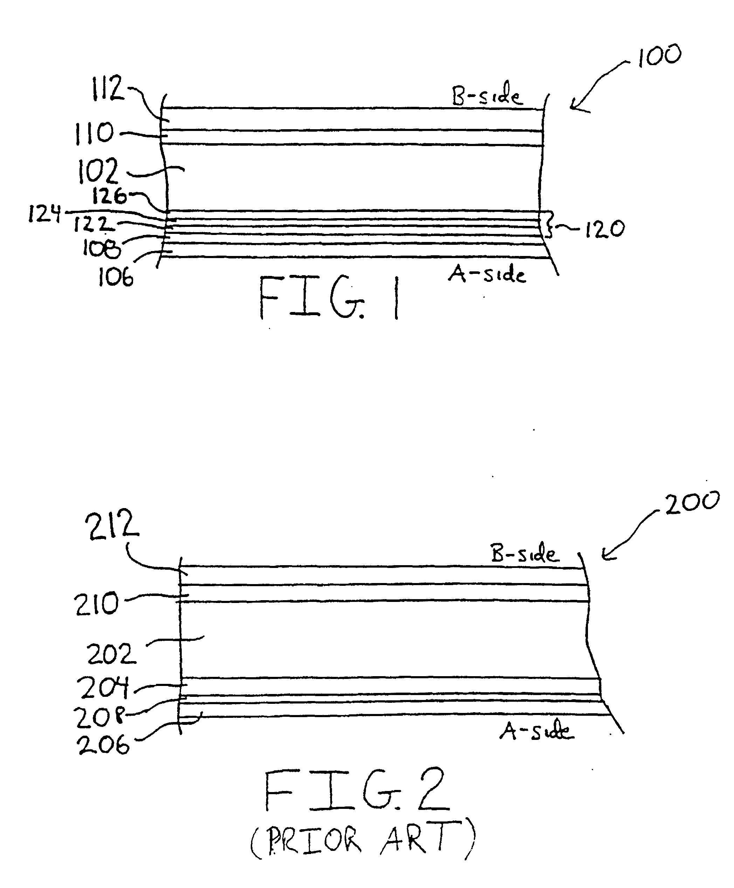

Headliners are commonly installed in vehicles to provide a decorative appearance to the ceilings of vehicle interior compartments. An example of a known headliner construction is shown in FIG.2 and generally designated by reference numeral 200.

As shown in FIG.2, the headliner 200 includes a relatively thick rigid substrate 202. which can be a fiberglass-impregnated polymer-based material, such as a fiberglass-impregnated polyurethane. The surface of the substrate 202 facing towards the vehicle interior compartment (not shown) is known in the industry as the "A-side". In the illustrated embodiment, the A-side has a barrier layer 204 contacting the A-side surface of the substrate 202. The barrier layer 204 is commonly made of a polyethylene film. The barrier layer 204 is interposed between the substrate 202 and a decorative cloth material 206 having a foamed backing 208. The decorative cloth material 206 is exposed to the vehicle interior compartment and conceals the substrate 202 and the barrier layer 204 from view.

Positioned on the opposite side of the substrate 202, also known in the industry as the "B-side" of the substrate 202, is another barrier layer 210, which can be made of a similar material to the barrier layer 204. A vibration-dampening layer (also known as an anti-squeak layer) 212 is optionally interposed between the barrier layer 210 and the vehicle frame (not shown) to minimize rattles and squeaks caused by relative movement between the headliner 200 and the vehicle frame during operation of the vehicle. The vibration-dampening layer 212 is commonly made of a foamed polymeric material.

It is known to produce the headliner 200 by placing the barrier layers 204 and 210 on opposite facing mold dies, respectively, then placing layers of fiberglass on the barrier layers 204 and 210 so that the layers of fiberglass face each other to define a mold cavity therebetween. Next, polyurethane precursors, such as polyols and polyisocyanates, are mixed and sprayed into the mold and the polyurethane is formed by compression molding, causing the fiberglass to disperse in the polyurethane substrate 202. The fiberglass-impregnated substrate 202 with united barrier layers 204 and 210 are then removed from the mold, trimmed, and united with the decorative cloth material 206 with foamed backing 208 on the A-side and the vibration-dampening layer 212 on the B-side.

The above-discussed conventional headliner manufacturing process poses problems that significantly affect its profitability and productivity. In particular, polyurethane-forming reactions between polyisocyanates and polyols by their very nature tend to generate a substrate having pores or voids at the substrate surfaces, including the A-surface. The pores are primarily generated during the reaction between the polyol, catalyst, water, and isocyanate. The pores may be generated during initial foaming of the headliner, and/or can become visible after the substrate 202 cools. Cooling can take 24 to 48 hours due to the relatively large thickness of the substrate 202, which may be on the order of 4 mm to 28 mm.

Although the substrate 202 is hidden from the interior compartment by the molded barrier layer 204 and the decorative cloth material 206, the molded barrier layer 204 and the decorative cloth material 206 tend to conform to the contour of the A-surface of the substrate 202. As a consequence, pores in the substrate 202 can cause unwanted dimples or pits to form in the decorative cloth material 206. These pits or dimples are visible with respect to the vehicle interior compartment and. therefore. warrant additional processing steps to make the headliner visually acceptable.

To address the problem of unwanted dimples and pits in the decorative cloth material 206. it is common to shelf the substrate 202 for at least 24 to 72 hours after molding is completed to permit the substrate 202 to cool sufficiently to permit voids to appear in the A-surface. After this shelf period. either the voids are covered via a patching procedure (using, for example, polypropylene mesh tape) or, if the voids are too abundant, the substrate is scrapped.

However, the shelving, inspection, and patching of substrates 202 is time-consuming and labor intensive and requires substantial storage space. Further, the 24-hour to 32-hour shelving of substrates 202 is sometimes insufficient to allow for void detection on the substrate surface. In particular, the relatively large thickness of the urethane substrate 202 compounds the problem of detecting voids in the A-surface of the substrate 202, since sometimes the voids do not appear for several days or weeks. In instances in which the headliner has already been shipped to a purchaser and/or installed on a vehicle before the dimples and pits appear, the recalling of parts and disassembling of vehicle interiors to remove defective headliners can result, thereby upsetting the manufacturer and increasing expenses. Further, post-assembly inspection of the headliner 202 further increases labor costs.

Thus, there is a significant need in the art for a vehicle headliner that eliminates or at least significantly reduces the formation of dimples and pits and the problems associated with detection of dimples and pits in the headliner. The process should desirably be capable of being implemented without requiring significant modifications to existing processes and manufacturing equipment.

### Summary of the Invention

It is, therefore, an object of this invention to solve the aforementioned problems associated with the related art as well as to address the need expressed above. In accordance with the principles of this invention, this and other objects are attained by providing a headliner in which the reinforcing layer interposed between the A-side surface of the substrate and decorative cloth material comprises a multi-layered laminate. The multi-layered laminate includes, at least, an adhesive layer for adhering the multi-layered laminate to the decorative cloth, a barrier layer, and a shape-retaining layer. The barrier layer is constructed and arranged to prevent the polyurethane or polyurethane precursors from bleeding therethrough during molding of the polyurethane. The shape-retaining layer has sufficient strength to substantially prevent the pores in the substrate from influencing the outer appearance of the decorative cloth material.

Also provided herein is a process of making a headliner that overcomes the above-discussed problems and attains the above-identified need in the art. Desirably, the practice the inventive process requires no or only minor modifications to conventional process equipment; thus, little capital expenditure is needed to convert to the inventive process.

The principles of this invention enunciated above are applicable to various types of vehicles, including passenger cars, trucks, vans, utility vehicles, and others.

### Brief Description of the Drawings

The accompanying drawings facilitate an understanding of this invention by depicting an embodiment of the invention and comparing it to a known headliner. In such drawings:
FIG. 1 is a sectional view of a headliner in accordance with an embodiment of this invention:
FIG. 2 is a sectional view of a known headliner; and

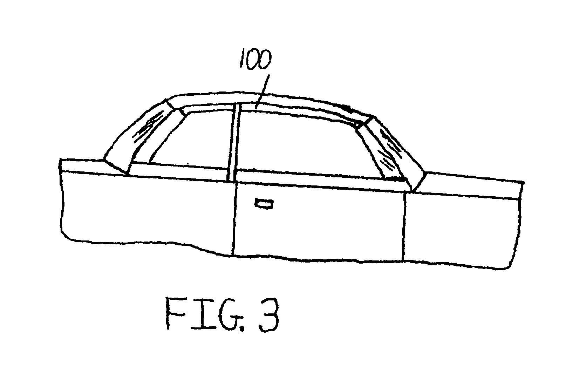

FIG. 3 is a schematic view showing an example of the placement of a headliner in a vehicle.

### Detailed Description of the Invention

Referring now more particularly to the drawings, a headliner of an embodiment of this invention is shown in FIG. 1 and generally designated by reference numeral 100. The headliner 100 includes a relatively thick rigid substrate 102, which can be a fiberglass-impregnated polymer-based material, such as a fiberglass-impregnated polyurethane. The surface of the substrate 102 facing towards the vehicle interior compartment (not shown) is known in the industry as the A-side surface, whereas the opposite surface of the substrate 102 facing away from the vehicle interior when the headliner 100 is mounted is known as the B-side surface. Generally, the thickness of the impregnated substrate 102 is, for example, in a range of from about 4 mm to about 24 mm, and more preferably is from 4 mm to 18 mm. Representative densities for the impregnated substrate 102 range from 48 kg/m³ to 160 kg/m³ (3.0 to 10.0 Ibs/ft³).

Positioned on the A-side surface of the substrate 102 is a multi-layered laminate 120, which in the illustrated embodiment is a tri-layered laminate. The multi-layered laminate 120 is interposed between the substrate 102 and a decorative cloth material 106 having an optional foamed backing 108. The decorative cloth material 106, which can be made of, by way of example, nylon, rayon, polyester, cotton, or combinations thereof, is exposed to the vehicle interior compartment and conceals the substrate 102 and laminate 120 from view. The thickness of the tri-layered laminate 120 can be in a range of from 0.025 mm to 0.051 mm (i.e., 1.0 mils to 2.0 mils, or 0.0010 inches to 0.0020 inches), preferably 0.038 mm to 0.051 mm (i.e., 1.5 mils to 2 mils, or 0.0015 inches to 0.0020 inches).

The first layer of the tri-layered laminate 120 is an adhesive layer 122, which adheres the multi-layered laminate 120 to the decorative cloth 106 and its optional foamed backing 108. In a preferred embodiment, the adhesive layer 122 is ethylene-vinyl acetate, although other less preferred adhesives, such as polyethylene, may be used. Generally, the deposition of the adhesive layer 122 is controlled to produce a thickness which, when measured as concentration over a cross section of the adhesive layer 122, is in a range of from 30 g/m² to 40 g/m². The ethylene-vinyl acetate layer 122 is preferably corona treated, e.g., flame treated or electrically or electrostatically charged, to have a dyne level from 46 to 55, preferably from 47 to 49 dynes. The adhesive layer 122 should have a softening temperature lower than the temperature at which the decorative cloth material 106 thermally degrades, so that the adhesive layer 122 can be softened or melted without discoloring the decorative cloth material 106. Generally, softening temperatures of from about 99°C (210°F) to about 104°C (220°F) are preferred for the adhesive layer 122.

The second layer of the laminate 120 is a barrier layer 124 that functions to prevent the polyurethane and polyurethane precursors from bleeding through the laminate 120 during the molding process, such as compression molding, in which the laminate 120 is placed in a mold die prior to injection of polyurethane precursors for forming the substrate 102. The barrier layer 124 is preferably a film comprising polyethylene, preferably with pores not greater than 25 microns. Other materials, such as polypropylene, polyethylene-polypropylene copolymer films, and other olefin polymers, copolymers, and terpolymers can be used. so long as the materials can provide the desired barrier function at a suitable thickness while exhibiting acceptable molding, fluidity and softening point. Generally, the deposition of the barrier layer 124 is controlled to produce a thickness which, when measured as concentration over a cross section of the barrier layer 124, is in a range of from 10 g/m² to 20 g/m², preferably 16 g/m². The elongation of the barrier layer 124 is preferably at least 40%.

The third layer of the laminate 120 is a shape-retaining layer 126 having sufficient strength to prevent the configuration of the shape-retaining layer 126 from being influenced by pores in the substrate 102. The shape-retaining layer 126 thereby prevents the decorative cloth material 106 from conforming to pores in the A-side surface of the substrate 102 so that the decorative cloth material 106 is free of pits and dimples. Generally, the deposition of the shape-retaining layer 126 is controlled to produce a thickness which, when measured as a concentration over a cross section of the shape-retaining layer 126, is in a range of from 30 g/m² to 40 g/m². The shape-retaining layer 126 preferably comprises a spun bond (or "non-woven") polypropylene or polyester. As referred to herein, spun bond or non-woven materials are characterized by an absence in distinction of directional properties. As with the barrier layer 124, the shape-retaining layer 126 preferably has an elongation of at least 40%. Antioxidants can be added to the barrier and shape-retaining layers 124 and 126.

The shape-retaining layer 126 of the laminate 120, which ist preferably disposed closest to the substrate 102, is primarily responsible for imparting the laminate 120 with most of its physical properties, although the barrier layer 124 has sufficient influence a to cause distinctions in directional properties of the laminate 120. Desirably, the laminate 120 has a machine tensile strength and cross-machine tensile strength (ASTM D 882-83) in ranges of 2700-2900 psi (18.62-19.99 ·10⁶N/m²) and 2400-2600 psi (16.55-17.93·10⁶N/m²) respectively, and more preferably 2800 psi (19.31·10⁶N/m²) and 2500 psi (17.24·10⁶N/m²) respectively. The elongation (ASTM D 882-89) of the laminate 120 is preferably 40-60%, with the machine elongation preferably being 45% and the cross-machine preferably being 56%. The tear strength (ASTM D 1922-67) is preferably 512±50 grams/16 plies along the machine direction and 316±50 grams/16 plies along the cross-machine direction.

It should be understood that additional layers, including more than one of the layers 122, 124 and 126, can be included in the multi-layered laminate 120, so long as the additional layers do not interfere with the above-discussed functions of the layers 122, 124 and 126.

In accordance with a preferred embodiment, the laminate 120 can be prepared as follows. The non-woven shape-retaining layer 126 is extruded at approximately 0,13 mm to 0,15 mm (5 to 6 mils. or 0,005 inch to 0,006 inch) thickness onto the barrier layer 124. The layers 124 and 126 are then run through a nip roller to achieve a desired film thickness of approximately 0,025 mm to 0,051 mm (i.e., 1,0 mils to 2,0 mils, or 0,0010 inches to 0,0020 inches), thus forming a bi-laminate. The layers 124 and 126 are then passed through a series of chiller rollers, followed by a series of heater elements to warm the bi-laminate. After the bi-laminate is formed, the adhesive layer 122 is fed onto the bi-laminate of layers 124 and 126 then passed with layers 124 and 126 through a series of hot rollers which compress and laminate the adhesive film 122 to layer 124 to make the trilaminate 120. The tri-laminate 120 is cooled and, optionally, cut and/or rolled for temporary storage.

Positioned on the opposite side of the substrate 102, also known in the industry as the "B-side" of the substrate 102, is a barrier layer 110. In a preferred embodiment, the barrier layer 110 is a Rochelle (polyethylene copolymer) film, which is available from Rochelle Plastics of Rochelle, Illinois and has a Tg of 83°C. It is also within the scope of this invention to use other materials as the barrier layer 110, including the use of the above-described multi-layered laminate as the barrier layer 110. A vibration-dampening layer 112 is optionally interposed between the barrier layer 110 and the vehicle frame (not shown) to minimize rattles and squeaks cause by relative movement between the headliner 100 and the vehicle frame. A representative vibration-dampening layer 112 is flame laminate polyether grade 11330XXX, available from General Foam of East Rutherford. N.J. As referred to herein, the vibration-dampening layer 112 also encompasses a scrim material, such as one having either (a) a bilaminate structure composed of a non-woven polypropylene film and a film of polypropylene, polyethylene, or polypropylene-polyethylene copolymer or (b) a trilaminate composed of two non-woven polypropylene films sandwiching a film of polypropylene, polyethylene, or polypropylene-polyethylene copolymer. The thickness of the non-woven polypropylene preferably is controlled to provide about 33.9 grams/m² (1 ounce/yard²) of material, whereas the polyethylene and/or polypropylene is about 35.9 grams/m² (30 grams/yard²).

A process of making a headliner in accordance with an embodiment of this invention will now be described in detail.

The substrate 102 is generated in a continuous manner by stacking onto a conveyor a Rochelle (polyethylene copolymer film, such as DOW 906. DOW 909, and Nolar films) barrier layer 110 and a fiberglass layer, and loading the stacked layers onto a first die of a compression molding apparatus. A suitable fiberglass roll is available from Nicofiber of Shawnee, Ohio, product number N754, and preferably has a thickness of 0.2 mm to 0.3 mm (i.e., 8-12 mils, or 0.008 inch to 0.012 inch). A separate conveyor delivers the multi-layered laminate 120 stacked with another fiberglass layer to a second die of the compression molding apparatus so that the fiberglass layers face each other and form a cavity therebetween. Next, polyurethane precursor materials, i.e., polyols and polyisocyanates, are sprayed into the mold and the polyurethane is compression molded. The spraying process may be performed via a standard X-Y pattern. with the spray head positioned 30.5 to 61 cm (12 to 24 inches) from the spraying surface. Representative polyols and isocyanates are RIMLINE 87335 and RUBINATE 8700, respectively, which are both available from ICI of Sterling Heights, Michigan. For these particular materials. the ratio (in grams) of isocyanate to polyol is preferably about 0.541:1 ± 0.050. Because of the rapid reactivity of the polyurethane precursors towards each other. the spraying step should be conducted quickly, preferably on the order of not more than 5 to 10 seconds, more preferably 5 to 6 seconds. The precursors can be introduced into the mold cavity at a chemical temperature of about 32°C ± 5°C (about 90°F ± 10°F). Alternative polyols and isocyanates are BASF ELASTOFLEX TF-23640R polyol and TF-23640T isocyanate, available from BASF of Wyandotte. Michigan. For these alternative materials, the ratio (in grams) of isocyanate to polyol is preferably 0.537 ± 0.040, and the temperature at which the precursors are introduced into the mold cavity is preferably about 26.7 °C ± 2.7°C (80°F ± 5°F).

In accordance with known molding techniques. one or both of the dies are moved towards each other to a closed position, in which the mold dies are slightly spaced apart from each other (e.g., via spacers) during compression molding to permit the urethane to foam to a desired thickness. During reaction of the polyurethane precursors and the foaming of the polyurethane, the fiberglass disperses in the polyurethane substrate from opposing die surfaces. The compression molding takes 1 to 2 minutes, preferably 60 to 80 seconds, although the molding time may depend on the thickness of the foam composite. i.e.. its cross section The temperature of the upper and lower mold halves can be, for example, 74°C ± 5°C (about 165°F ± 10°F) and 63°C ± 5°C (about 145°F ± 10°F), respectively. During foaming, the polyurethane disperses in the fiberglass. Generally, the dispersion of fibers is not homogeneous throughout the polyurethane substrate 102; rather, higher concentrations of fiberglass are usually found at the opposite surfaces of the polyurethane substrate 102.

The molding time is directly dependent upon the amount of urethane applied during the spraying process and the cross-sectional thickness of the mold cavity to be filled. The composition and weight of the fiberglass also affects the cycle time and integrity of the finished product. The binder content is preferably in a range of 4.0 to 6.5% by weight, preferably 5.0% by weight, of the weight of the fiberglass. The fiberglass content is preferably in a range of from about 0.33 to 0.50 ounces per square foot.

The fiberglass-impregnated substrate 102 with adhered multi-layered laminate 120 and reinforcement layer 110 are then removed from the mold, trimmed, and united with the decorative cloth material 106 with optional foamed backing 108 on the A-side and the vibration-dampening layer 112 on the B-side. The trimming of the excess material, known in the art as offal, can be performed by a water-jet process.

The foregoing detailed description of the preferred embodiments of the invention has been provided for the purposes of illustration and description. It is not intended to be exhaustive or to limit the invention to the precise embodiments disclosed. Many modifications and variations will be apparent to practitioners skilled in this art. The embodiments were chosen and described in order to best explain the principles of the invention and its practical application. thereby enabling others skilled in the art to understand the invention for various embodiments and with various modifications as are suited to the particular use contemplated. It is intended that the scope of the invention be defined by the following claims.

## Claims

1. A headliner mountable against a ceiling of a vehicle to from a part of the interior of the vehicle, the headliner comprising:
a substrate (102) which comprises a polyurethane and has an A-side surface facing the interior of the vehicle and a B-side surface facing away from the interior of the vehicle when the headliner is mounted in the vehicle, said A-side surface having pores therein:
at least one B-side barrier or reinforcement layer (110) united with the B-side surface of the substrate:
at least one decorative cloth material (106) exposed to the interior of the vehicle and constructed and arranged to conceal the substrate from view of the interior of the vehicle when the headliner is mounted in the vehicle, the decorative cloth material optionally being provided with a foamed backing (108), and
at least one multi-layered laminate (120) interposed between the A-side surface of the substrate and the decorative cloth material, the multi-layered laminate comprising:
at least one adhesive layer (122) adhering the multi-layered laminate (120) to the decorative cloth material (106), and
at least one barrier layer (124) constructed and arranged to prevent the polyurethane or polyurethane precursors from bleeding therethrough during formation of the substrate (102),
**characterized in that** the multi-layered laminate (120) further comprises
at least one shape-retaining layer (126) having sufficient strength to prevent the pores in the A-side surface of the substrate (102) from substantially influencing the outer appearance of the decorative cloth material (106).

2. The headliner of claim 1, wherein the barrier layer (124) is interposed between the adhesive layer (122) and the shape-retaining layer (126) of the multi-layered laminate (120).

3. The headliner of claim 2, wherein the adhesive layer (122) comprises ethylene-vinyl acetate.

4. The headliner of claim 2, wherein the shape-retaining layer (126) comprises a non-woven material.

5. The headliner of claim 4, wherein the non-woven material is non-woven polypropylene.

6. The headliner of claim2, wherein the barrier layer (124) comprises polyethylene.

7. The headliner of claim 2, wherein the adhesive layer (122) comprises ethylene-vinyl acetate, the shape-retaining layer (126) comprises non-woven polypropylene, and the barrier layer comprises polyethylene.

8. The headliner of claim 7, wherein the adhesive layer (122) is adhered to the foamed backing of the decorative cloth material (106) and further wherein the foamed backing (108) provides a cushioning feel to the headliner.

9. The headliner of claim 7, wherein the substrate (102) is impregnated with at least one reinforcing material.

10. The headliner of claim 9, wherein the reinforcing material is fiberglass.

11. The headliner of claim 7, wherein the B-side includes at least one vibration-dampening layer (112) constructed and arranged to reduce noise generated by relative movement between the ceiling of the vehicle and the headliner when mounted.

12. Headliner according to claim 1, wherein at least one B-side reinforcement layer (110) is interposed between the vibration dampening layer (112) and the substrate (102).

13. The headliner of claim 12, wherein the adhesive layer comprises ethylene-vinyl acetate, the shape-retaining layer comprises non-woven polypropylene, and the barrier layer comprises polyethylene.

14. A vehicle comprising the headliner of any one of claims 1 to 13.

15. A method of making a headliner mountable against a ceiling of a vehicle to form a part of the interior of the vehicle, the headliner comprising a polyurethane substrate (102) having an A-side surface facing the interior of the vehicle and a B-side surface facing away from the interior of the vehicle when the headliner is mounted in the vehicle, the A-side surface having pores and being adhered to at least one multi-layered laminate (120) with at least one decorative cloth material (106) layered thereon, the decorative cloth material (106) being constructed and arranged to conceal the substrate (102) and multi-layered laminate (120) from view of the interior of the vehicle when the headliner is mounted in the vehicle, said method comprising:
placing the multi-layered laminate (120) onto a first mold die surface, the multi-layered laminate (120) comprising at least one adhesive layer (122) for uniting the multi-layered laminate (120) to the decorative cloth material (106), at least one barrier layer (124) constructed and arranged to prevent the polyurethane or polyurethane precursors from bleeding therethrough during formation of the substrate (102),
placing at least one reinforcement layer (110) onto a second mold die surface so that a mold cavity is formed between the multi-layered laminate and the reinforcement layer,
introducing a polyurethane precursor composition into the mold cavity and foaming the polyurethane precursor composition to form the substrate (102) having the multi-layered laminate (120) united to the A-side thereof and the reinforcement layer (110) united with the B-side thereof; and removing the substrate (102) with the multi-layered laminate (120) and the reinforcing layer (110) united therewith from the mold cavity and adhering the decorative cloth material (106) to the A-side thereof,
**characterized in that** the multi-layered laminate placed onto the first mold die surface further comprises
at least one shape-retaining layer (126) having sufficient strength to prevent the pores in the A-side surface from substantially influencing the outer appearance of the decorative cloth material (106).

16. The method of claim 15, wherein the adhesive layer (122) comprises ethylene-vinyl acetate, the shape-retaining layer (126) comprises non-woven polypropylene, and the barrier layer (124) comprises polyethylene.

17. The method of claim 16, said method further comprising placing layers of reinforcing fibers onto the multi-layered laminate (120) and the reinforcing layer (110) prior to said step of introducing a polyurethane precursor composition into the mold cavity so that said foaming step disperses the fibers into the substrate (102).

18. The method of claim 17, wherein the barrier layer (124) is interposed between the adhesive layer (122) and the shape-retaining layer (126) of the multi-layered laminate (120).

19. The method of claim 18, further comprising attaching to the B-side at least one vibration-damping layer (112) constructed and arranged to reduce noise generated by relative movement between the ceiling of the vehicle and the headliner when mounted.

## Patentansprüche

1. Dachhimmel, der an einem Dach eines Fahrzeugs montierbar ist, um einen Teil des Innenraums des Fahrzeugs zu bilden, mit:
einem Substrat (102), das ein Polyurethan umfaßt und eine bei in dem Fahrzeug montiertem Dachhimmel dem Innenraum des Fahrzeugs zugewandte A-Seiten-Fläche und eine dem Innenraum des Fahrzeugs abgewandte B-Seiten-Fläche aufweist, wobei die A-Seiten-Fläche Poren aufweist;
mindestens einer B-Seiten-Barrieren- oder -Verstärkungsschicht (110), die mit der B-Seiten-Fläche des Substrats vereinigt ist;
mindestens einem Verzierungsgewebematerial (106), das zum Innenraum des Fahrzeugs freiliegt und derart konstruiert und angeordnet ist, daß es das Substrat vor dem Blick aus dem Innenraum des Fahrzeugs verbirgt, wenn der Dachhimmel im Fahrzeug montiert ist, wobei das Verzierungsgewebematerial optional mit einer Schaumstoffgegenplatte (108) versehen ist, und
mindestens einem Mehrschichtlaminat (120), das zwischen der A-Seiten-Fläche des Substrats und dem Verzierungsgewebematerial eingefügt ist, wobei das Mehrschichtlaminat folgendes umfaßt:
mindestens eine Klebstoffschicht (122), die das Mehrschichtlaminat (120) an dem Verzierungsgewebematerial (106) festklebt, und
mindestens eine Barrierenschicht (124), die derart konstruiert und angeordnet ist, daß sie ein Auslaufen des Polyurethans oder von Polyurethan-Zwischenstoffen durch sie während der Bildung des Substrats (102) verhindert,
**dadurch gekennzeichnet, daß** das Mehrschichtlaminat (120) des weiteren umfaßt:
mindestens eine Formerhaltungsschicht (126), die eine ausreichende Festigkeit aufweist, um zu verhindern, daß die Poren in der A-Seiten-Fläche des Substrats (102) das äußere Aussehen des Verzierungsgewebematerials (106) wesentlich beeinflussen.

2. Dachhimmel nach Anspruch 1, bei dem die Barrierenschicht (124) zwischen die Klebstoffschicht (122) und die Formerhaltungsschicht (126) des Mehrschichtlaminats (120) eingefügt ist.

3. Dachhimmel nach Anspruch 2, bei dem die Klebstoffschicht (122) Ethylenvinylacetat umfaßt.

4. Dachhimmel nach Anspruch 2, bei dem die Formerhaltungsschicht (126) ein Vliesmaterial umfaßt.

5. Dachhimmel nach Anspruch 4, bei dem das Vliesmaterial ein Propylen-Vlies ist.

6. Dachhimmel nach Anspruch 2, bei dem die Barrierenschicht (124) Polyethylen umfaßt.

7. Dachhimmel nach Anspruch 2, bei dem die Klebstoffschicht (122) Ethylenvinylacetat umfaßt, die Formerhaltungsschicht (126) Polypropylen-Vlies umfaßt und die Barrierenschicht Polyethylen umfaßt.

8. Dachhimmel nach Anspruch 7, bei dem die Klebstoffschicht (122) an die Schaumstoffgegenplatte des Verzierungsgewebematerials (106) geklebt ist und bei dem des weiteren die Schaumstoffgegenplatte (108) für den Dachhimmel eine Polsterhaptik schafft.

9. Dachhimmel nach Anspruch 7, bei dem das Substrat (102) mit mindestens einem Verstärkungsmaterial imprägniert ist.

10. Dachhimmel nach Anspruch 9, bei dem das Verstärkungsmaterial durch Glasfasern gebildet ist.

11. Dachhimmel nach Anspruch 7, bei dem die B-Seite mindestens eine Schwingungsdämpfungsschicht (112) umfaßt, die derart konstruiert und angeordnet ist, daß sie durch eine Relativbewegung zwischen der Innenseite des Fahrzeugdachs und dem montierten Dachhimmel erzeugtes Geräusch verringert.

12. Dachhimmel nach Anspruch 1, bei dem mindestens eine B-Seiten-Verstärkungsschicht (110) zwischen die Schwingungsdämpfungsschicht (112) und das Substrat (102) eingefügt ist.

13. Dachhimmel nach Anspruch 12, bei dem die Klebstoffschicht Ethylenvinylacetat umfaßt, die Formerhaltungsschicht Polypropylen-Vlies umfaßt und die Barrierenschicht Polyethylen umfaßt.

14. Fahrzeug, das einen Dachhimmel nach einem der Ansprüche 1 bis 13 umfaßt.

15. Verfahren zum Herstellen eines Dachhimmels, der an einem Dach eines Fahrzeugs montierbar ist, um einen Teil des Innenraums des Fahrzeugs zu bilden, wobei der Dachhimmel ein Polyurethan-Substrat (102) mit einer bei in dem Fahrzeug montiertem Dachhimmel dem Innenraum des Fahrzeugs zugewandten A-Seiten-Fläche und einer dem Innenraum des Fahrzeugs abgewandten B-Seiten-Fläche aufweist, wobei die A-Seiten-Fläche Poren aufweist und an mindestens einem Mehrschichtlaminat (120) angeklebt ist, auf das wenigstens ein Verzierungsgewebematerial (106) aufgebracht ist, wobei das Verzierungsgewebematerial (106) derart konstruiert und angeordnet ist, daß es das Substrat (102) und das Mehrschichtlaminat (120) vor dem Blick aus dem Innenraum des Fahrzeugs verbirgt, wenn der Dachhimmel im Fahrzeug montiert ist, wobei das Verfahren folgende Schritte umfaßt:
Anordnen des Mehrschichtlaminats (120) auf einer ersten Gießformoberfläche, wobei das Mehrschichtlaminat (120) mindestens eine Klebstoffschicht (122) zum Vereinigen des Mehrschichtlaminats (120) mit dem Verzierungsgewebematerial (106) und mindestens eine Barrierenschicht (124), die derart konstruiert und angeordnet ist, daß sie ein Auslaufen des Polyurethans oder von Polyurethan-Zwischenstoffen durch sie hindurch während der Bildung des Substrats (102) verhindert, umfaßt,
Anordnen mindestens einer Verstärkungsschicht (110) auf einer zweiten Gießformoberfläche, so daß zwischen dem Mehrschichtlaminat und der Verstärkungsschicht ein Formhohlraum gebildet wird,
Einbringen einer Polyurethan-Zwischenstoffverbindung in den Formhohlraum und Aufschäumen der Polyurethan-Zwischenstoffverbindung, um das Substrat (102) zu bilden, das daß mit seiner A-Seite vereinigte Mehrschichtlaminat (120) und die mit seiner B-Seite vereinigte Verstärkungsschicht (110) besitzt, und Entfernen des Substrats (102) mit dem Mehrschichtlaminat (120) und der Verstärkungsschicht (110), die mit ihm vereinigt sind, aus dem Formhohlraum und Ankleben des Verzierungsgewebematerials (106) an seine A-Seite,
**dadurch gekennzeichnet, daß** das auf der ersten Gießformoberfläche angeordnete Mehrschichtlaminat des weiteren umfaßt:
mindestens eine Formerhaltungsschicht (126), die eine ausreichende Festigkeit aufweist, um zu verhindern, daß die Poren in der A-Seiten-Fläche das äußere Aussehen des Verzierungsgewebematerials (106) wesentlich beeinflussen.

16. Verfahren nach Anspruch 15, bei dem die Klebstoffschicht (122) Ethylenvinylacetat umfaßt, die Formerhaltungsschicht (126) Polypropylen-Vlies umfaßt und die Barrierenschicht (124) Polyethylen umfaßt.

17. Verfahren nach Anspruch 16, wobei das Verfahren vor dem Schritt des Einbringens einer Polyurethan-Zwischenstoffverbindung in den Formhohlraum des weiteren das Anordnen von Schichten aus Verstärkungsfasern auf dem Mehrschichtlaminat (120) und auf der Verstärkungsschicht (110) umfaßt, so daß der Aufschäumschritt die Fasern im Substrat (102) verteilt.

18. Verfahren nach Anspruch 17, bei dem die Barrierenschicht (124) zwischen die Klebstoffschicht (122) und die Formerhaltungsschicht (126) des Mehrschichtlaminats (120) eingefügt ist.

19. Verfahren nach Anspruch 18, das des weiteren das Befestigen mindestens einer Schwingungsdämpfungsschicht (112) an der B-Seite umfaßt, wobei die Schwingungsdämpfungsschicht (112) derart konstruiert und angeordnet ist, daß sie durch eine Relativbewegung zwischen der Innenseite des Fahrzeugdachs und dem montierten Dachhimmel erzeugtes Geräusch verringert.

## Revendications

1. Garniture de pavillon susceptible d'être montée contre le plafond d'un véhicule pour former une partie de l'intérieur du véhicule, la garniture de pavillon comprenant :
un substrat (102) qui comprend du polyuréthane et qui présente une surface du côté dit "A" tourné vers l'intérieur du véhicule et une surface du côté dit "B" détourné de l'intérieur du véhicule lorsque la garniture est montée dans le véhicule, ladite surface du côté A présentant des pores ;
au moins une couche de barrière ou de renforcement (110) du côté B et unie à la surface du substrat du côté B ;
au moins un matériau en tissu décoratif (106) exposé vers l'intérieur du véhicule et construit et agencé pour cacher le substrat de la vue de l'intérieur du véhicule quand la garniture est montée dans le véhicule, le matériau en tissu décoratif étant doté en option d'un doublage en mousse (108), et
au moins un stratifié multicouches (120) interposé entre la surface du substrat du côté A et le matériau en tissu décoratif, le stratifié multicouches comprenant :
au moins une couche adhésive (122) qui fait adhérer le stratifié multicouches (120) sur le matériau en tissu décoratif (106), et
au moins une couche barrière (124) réalisée et agencée pour empêcher au polyuréthane ou aux précurseurs de polyuréthane de fuir à travers celle-ci pendant la formation du substrat (102),
**caractérisée en ce que** le stratifié multicouches (120) comprend en outre au moins une couche de maintien de forme (126) ayant une résistance suffisante pour empêcher aux pores dans la surface du substrat (102) du côté A d'influencer sensiblement l'aspect extérieur du matériau en tissu décoratif (106).

2. Garniture de pavillon selon la revendication 1, dans laquelle la couche de barrière (124) est interposée entre la couche adhésive (122) et la couche de maintien de forme (126) du stratifié multicouches (120).

3. Garniture de pavillon selon la revendication 2, dans laquelle la couche adhésive (122) comprend de l'acétate éthylène-vinyle.

4. Garniture de pavillon selon la revendication 2, dans laquelle la couche de maintien de forme (126) comprend un matériau non-tissé.

5. Garniture de pavillon selon la revendication 4, dans laquelle le matériau non-tissé est du polypropylène non-tissé.

6. Garniture de pavillon selon la revendication 2, dans laquelle la couche de barrière (124) comprend du polyéthylène.

7. Garniture de pavillon selon la revendication 2, dans laquelle la couche adhésive (122) comprend de l'acétate éthylène-vinyle, la couche de maintien de forme (126) comprend du polypropylène non-tissé, et la couche de barrière comprend du polyéthylène.

8. Garniture de pavillon selon la revendication 7, dans laquelle la couche adhésive (122) est adhérée sur le doublage en mousse du matériau en tissu décoratif (106), et dans laquelle le doublage en mousse (108) procure en outre une sensation de rembourrage à la garniture de pavillon.

9. Garniture de pavillon selon la revendication 7, dans laquelle le substrat (102) est imprégné avec au moins un matériau de renforcement.

10. Garniture de pavillon selon la revendication 9, dans laquelle le matériau de renforcement est en fibres de verre.

11. Garniture de pavillon selon la revendication 7, dans laquelle le côté B inclut au moins une couche d'amortissement de vibrations (112) réalisée et agencée pour réduire les bruits engendrés par un mouvement relatif entre le plafond du véhicule et la garniture de pavillon lorsqu'elle est montée.

12. Garniture de pavillon selon la revendication 1, dans laquelle au moins une couche de renforcement (110) du côté B est interposée entre la couche d'amortissement de vibrations (112) et le substrat (102).

13. Garniture de pavillon selon la revendication 12, dans laquelle la couche adhésive comprend de l'acétate éthylène-vinyle, la couche de maintien de forme comprend du polypropylène non-tissé, et la couche de barrière comprend du polyéthylène.

14. Véhicule comprenant la garniture de pavillon selon l'une quelconque des revendications 1 à 13.

15. Procédé pour réaliser une garniture de pavillon susceptible d'être montée contre le plafond d'un véhicule pour faire partie de l'intérieur du véhicule, la garniture de pavillon comprenant un substrat en polyuréthane (102) ayant une surface du côté dit "A" tourné vers l'intérieur du véhicule et une surface du côté dit "B" détourné de l'intérieur du véhicule quand la garniture est montée sur dans le véhicule, la surface du côté A ayant des pores et étant adhérée sur au moins un stratifié multicouches (120) avec au moins un matériau en tissu décoratif (106) appliqué sur celui-ci, le matériau en tissu décoratif (106) étant réalisé et agencé pour cacher le substrat (102) et le stratifié multicouches (120) de la vue de l'intérieur du véhicule quand la garniture est montée dans le véhicule, ledit procédé comprenant les opérations suivantes :
on place le stratifié multicouches (120) sur une première surface d'une matrice de moulage, le stratifié multicouches (120) comprenant au moins une couche adhésive (122) pour unir le stratifié multicouches (120) au matériau en tissu décoratif (106), au moins une couche de barrière (124) réalisée et agencée pour empêcher au polyuréthane ou aux précurseurs de polyuréthane de fuir à travers celle-ci pendant la formation du substrat (102),
on place au moins une couche de renforcement (110) sur une seconde surface d'une matrice de moulage de telle manière qu'une cavité de moulage est formée entre le stratifié multicouches et la couche de renforcement,
on introduit une composition précurseur de polyuréthane dans la cavité de moulage et l'on fait mousser la composition précurseur de polyuréthane pour former le substrat (102) tel que le stratifié multicouches (120) est uni au côté A de celui-ci et la couche de renforcement (110) est unie au côté B de celui-ci ; et
on enlève le substrat (102) avec le stratifié multicouches (120) et la couche de renforcement (110) unis à celui-ci hors de la cavité de moulage, et l'on adhère le matériau en tissu décoratif (106) sur son côté A,
**caractérisé en ce que** le stratifié multicouches placé sur la première surface d'une matrice de moulage comprend en outre au moins une couche de maintien de forme (126) ayant une résistance suffisante pour empêcher aux pores dans la surface du côté A d'influencer sensiblement l'aspect extérieur du matériau en tissu décoratif (106).

16. Procédé selon la revendication 15, dans lequel la couche adhésive (122) comprend de l'acétate éthylène-vinyle, la couche de maintien de forme (126) comprend du polypropylène non-tissé, et la couche de barrière (124) comprend du polyéthylène.

17. Procédé selon la revendication 16, comprenant en outre la mise en place de couches de fibres de renforcement sur le stratifié multicouches (120) et la couche de renforcement (110) avant l'opération d'introduction d'une composition précurseur de polyuréthane dans la cavité de moule, de sorte que ladite opération de moussage disperse les fibres dans le substrat (102).

18. Procédé selon la revendication 17, dans lequel la couche de barrière (124) est interposée entre la couche adhésive (122) et la couche de maintien de forme (126) du stratifié multicouches (120).

19. Procédé selon la revendication 18, comprenant en outre d'attacher sur le côté B au moins une couche d'amortissement de vibrations (112) réalisée et agencée pour réduire les bruits engendrés par le mouvement relatif entre le plafond du véhicule et la garniture lorsqu'elle est montée.
